# FASCICULE DE BREVET EUROPEEN

(11) **EP 1 965 630 B1**
(45) Date de publication et mention de la délivrance du brevet: **16.09.2009**
(21) Numéro de dépôt: 06847187.9
(22) Date de dépôt: 20.12.2006
(51) Int. Cl.: A01B 73/04

(54) **ENGIN AGRICOLE COMPORTANT UN ATTELAGE PERFECTIONNE**
LANDWIRTSCHAFTSVORRICHTUNG MIT EINER VERBESSERTEN KUPPLUNGSSTRUKTUR
AGRICULTURAL IMPLEMENT COMPRISING AN IMPROVED HITCH STRUCTURE

(30) Priorité: 22.12.2005 FR 0554011
(43) Date de publication de la demande: 10.09.2008
(73) Titulaire: KUHN S.A., 67706 Saverne Cedex (FR)
(72) Inventeur: BRENEUR, David, 42320 Cellieu (FR); FISCHBACH, Gilles, 67700 Monswiller (FR)
(86) Numéro de dépôt international: PCT/FR2006/051397
(87) Numéro de publication internationale: WO 2007/074292

(56) Documents cités:
- EP-A- 1 093 707
- EP-A1- 0 808 557
- US-A- 4 409 780

## Description

La présente invention se rapporte au domaine technique général des machines agricoles. L'invention concerne un engin agricole comportant un châssis, un moteur, une cabine de pilotage, un attelage et au moins deux unités de travail. Lesdites unités de travail sont liées audit attelage dudit engin agricole par un cadre d'attelage. Lesdites au moins deux unités de travail peuvent être pivotées entre une position de travail dans laquelle lesdites unités de travail s'étendent sensiblement horizontalement et transversalement à la direction d'avance au travail, et une position de transport dans laquelle lesdites unités de travail s'étendent sensiblement au-dessus dudit châssis.

Il existe dans l'état de la technique un tel engin agricole automoteur équipé de plusieurs unités de travail de manière à couvrir une large surface et améliorer sa productivité. Lesdites unités de travail peuvent être usuellement disposées sur l'avant ou sur l'arrière de l'engin agricole. De tels engins disposent d'une largeur de travail pouvant atteindre 9 mètres, pour les déplacer sur les routes il a été nécessaire de prévoir une position de transport de largeur réduite dans laquelle les unités de travail sont pivotées à la verticale pour respecter la législation limitant la largeur de transport à trois mètres.

Le repliement desdites unités de travail à la verticale, afin de respecter cette largeur maximale de trois mètres pour les déplacements sur les voies publiques, conduit à une limitation de la largeur de travail des unités de travail car l'engin doit également respecter la limitation en hauteur de quatre mètres. Dans cette position de transport, il se pose un problème lié au positionnement des unités de travail relevées a l'avant ou à l'arrière de l'engin, selon le modèle, qui est celui de la stabilité notamment en cas de vent ou sur des terrains accidentés. L'instabilité de l'engin peut provoquer, dans certaines conditions défavorables, son renversement.

Dans le but de résoudre les principales difficultés évoquées précédemment, il a été proposé, dans le document FR 0551207 de la demanderesse, un engin agricole comportant une cabine de pilotage pouvant se déplacer et pivoter afin que l'engin puisse se mouvoir au transport dans une direction opposée à celle du travail. Au transport, le repliement des unités de travail sur le châssis n'entraîne pas d'instabilité de l'engin lors de la conduite sur les routes et chemins. Pour cela, les deux unités de travail sont reliées à un support central. Ce support central est articulé sur le cadre d'attelage par l'intermédiaire d'une articulation horizontale et perpendiculaire à la direction d'avance et d'un actionneur agissant entre le support central et le cadre d'attelage. Ainsi, les unités de travail pivotent autour de l'articulation horizontale par l'intermédiaire de l'actionneur. Les unités de travail basculent au-dessus de l'engin.

L'utilisation d'une telle articulation horizontale entre le support central et le cadre d'attelage n'est pas optimale. L'engin agricole réalise généralement différents types de travaux, il utilise pour cela plusieurs types d'unités de travail. Il est donc nécessaire de prévoir pour chacun des types d'unités de travail une articulation et un actionneur entre le support central et le cadre d'attelage permettant le basculement des unités de travail au-dessus de l'engin agricole. Un autre engin agricole similaire est décrit dans le document EP-A-O 808 557.

La présente invention a pour but de remédier aux inconvénients précités et de proposer un engin agricole tel que décrit dans l'introduction dont la réalisation est simplifiée.

A cet effet, une importante caractéristique de l'invention consiste en ce que l'attelage est lié audit châssis via une structure rigide elle-même liée audit châssis au moyen d'une articulation transversale, au moins un actionneur étant prévu entre le châssis et ladite structure rigide pour permettre le basculement de ladite structure rigide autour de l'articulation transversale. La largeur de travail des unités de travail n'est donc pas limitée à quatre mètres, hauteur limite d'après la législation routière.

L'attelage de l'engin permet de basculer dans la position de transport des unités de travail de grandes dimensions au-dessus du châssis.

L'engin agricole est donc performant car il dispose d'un rendement de travail élevé avec une largeur de transport réduite. Une telle solution est donc très attractive. Lors du transport, l'engin agricole selon l'invention est relativement compact et sa hauteur est inférieure à quatre mètres, soit donc dans le gabarit routier autorisé. L'engin est ramassé et il est très stable lors des déplacements entre les zones de travail. Par cet attelage présentant une structure rigide, une articulation et un actionneur prévu sur le châssis, l'engin devient également polyvalent. Il peut ainsi être amené à déplacer plusieurs types d'unités de travail de grandes largeurs.

Un tel attelage est utilisable aussi bien sur des engins agricoles disposant d'unités de travail placées à l'arrière du châssis dans sa position de travail, que sur des engins disposant d'unités frontales et comportant une cabine de pilotage déplaçable et pouvant pivoter à 180°.

D'autres caractéristiques et avantages de l'invention se dégageront de la description qui va suivre en regard des dessins annexés qui ne sont donnés qu'à titre d'exemples non limitatifs.

La **figure 1** est une vue de dessus d'un engin agricole disposant de l'attelage basculant, les unités de travail étant déployées pour le travail dans une parcelle.

La **figure 2** est une vue de côté du même engin agricole dans une position de transport dans laquelle les unités de travail ont été repliées au-dessus du châssis.

La **figure 3** illustre la partie arrière de l'engin agricole, en perspective.

La **figure 4** montre, selon une vue de côté, l'attelage dans la position de travail avec les unités de travail en travail.

La **figure 5** montre, selon une vue de côté, l'attelage dans la position de travail avec les unités de travail repliées à la verticale.

La **figure 6** illustre, selon une vue de côté, l'attelage dans la position de transport avec les unités de travail repliées.

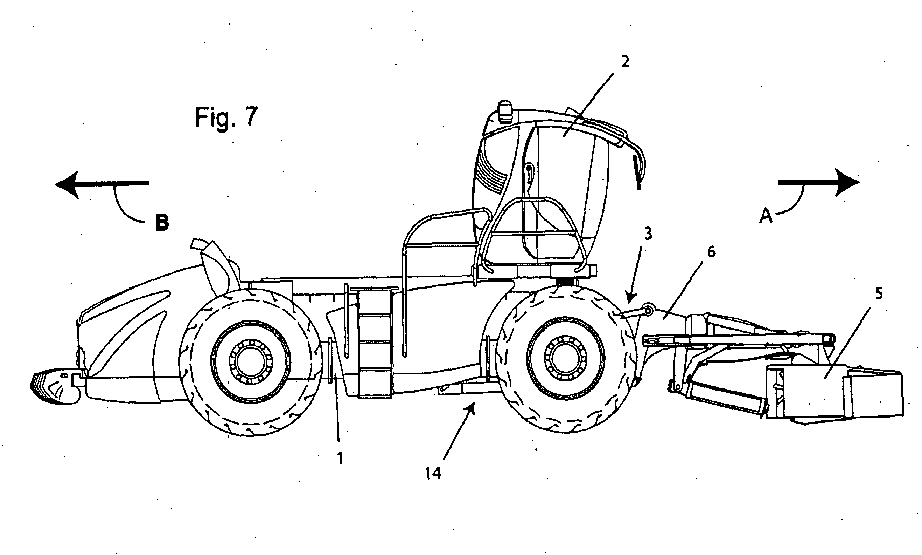

La **figure 7** montre, selon une vue de côté, une deuxième variante d'un engin agricole selon l'invention.

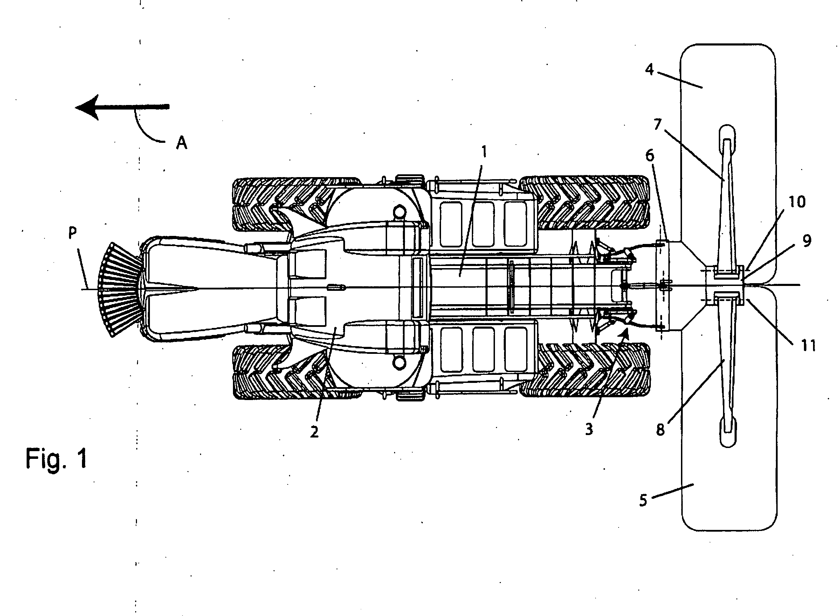

Une première variante d'un engin agricole automoteur pouvant disposer de l'invention est illustrée sur la figure 1. L'engin agricole comporte un châssis (1) reposant au sol au moyen de quatre roues, un moteur, une cabine de pilotage (2), un attelage (3) et des unités de travail (4, 5) liées à l'attelage (3). L'engin agricole est ainsi autonome. L'engin agricole est amené à se déplacer suivant une direction et un sens d'avance (A). Il est destiné à entraîner et à supporter au moins partiellement les unités de travail (4, 5). La cabine de pilotage (2) est orientée dans la direction (A) et permet de diriger l'ensemble du véhicule (1) dans la direction d'avance (A). Cette direction d'avance (A) lors du travail est la même que celle pour le transport.

Dans la position de travail présentée sur la figure 1, les unités de travail (4, 5) sont positionnées à l'arrière de l'engin agricole et symétriquement de chaque côté du plan vertical médian (P) de l'engin. Les unités de travail (4, 5) s'étendent sensiblement horizontalement et transversalement, à la direction d'avance au travail (A). Les unités de travail (4, 5) sont liées à l'attelage (3) par un cadre d'attelage (6).

Chaque unité de travail (4, 5) avec son bras porteur (7, 8) est liée de manière pivotante à un support central (9) au moyen d'une articulation respective (10, 11) dont l'axe est dirigé suivant la direction d'avance (A). Ledit support central (9) étant relié au cadre d'attelage, (6). Il est prévu des organes de manoeuvre, par exemple des vérins (non représentés), destinés à pivoter les unités de travail (4, 5) autour de chaque articulation respective (10, 11) d'une position sensiblement horizontale de travail à une position verticale, et inversement. Dans la position verticale, les unités de travail (4, 5) sont de préférence disposées symétriquement par rapport au plan vertical médian (P) de l'engin. Les articulations respectives (10, 11) sont positionnées de manière à ce que, en position verticale, les unités de travail (4, 5) ne dépassent pas la largeur autorisée pour circuler sur la voie publique. L'engin agricole respecte lui aussi la largeur maximale autorisée.

A la lumière de la figure 1, on remarque que l'attelage (3) est disposé à l'arrière de l'engin agricole compte tenu de la direction d'avance (A). A l'arrière de la cabine de pilotage (2) sur le châssis (1) de l'engin agricole, un espace est dégagé pour placer les unités de travail (4, 5) lorsque celles-ci sont repliées.

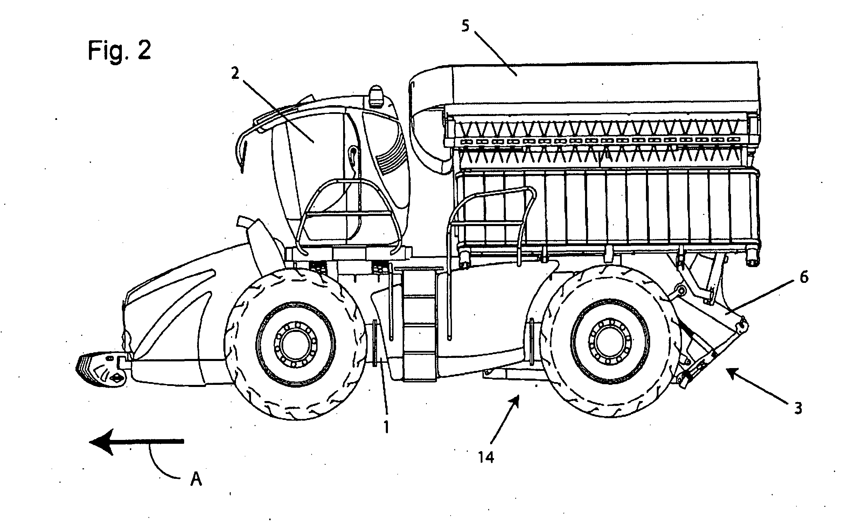

Le passage de la position de travail, illustrée dans la figure 1, à la position de transport, illustrée dans la figure 2, s'effectue essentiellement en deux étapes. Dans un premier temps, les unités de travail (4, 5) sont repliées à la verticale par l'intermédiaire de vérins hydrauliques autour des articulations (10, 11), tel que cela est décrit précédemment. Dans une deuxième étape, l'attelage (3) pivote de 90° pour amener les unités de travail (4, 5) repliées à la verticale dans une position de transport dans laquelle les unités de travail (4, 5) s'étendent sensiblement au-dessus du châssis. D'une manière avantageuse, les unités de travail (4, 5) s'étendent dans un plan horizontal parallèle à la direction d'avance (A), tel que cela est illustré sur la figure 2.

Selon une importante caractéristique de l'invention, l'attelage (3) est lié au châssis (1) au moyen d'une structure rigide (12). La structure rigide (12) est liée au châssis (1) au moyen d'une articulation transversale (13). Entre le châssis (1) et la structure rigide (12) est prévu au moins un actionneur (14) qui permet le basculement de la structure rigide (12) autour de l'articulation transversale (13).

L'articulation transversale (13) est disposée dans la partie supérieure de la structure rigide (12). L'attelage (3) peut ainsi basculer entre une position de travail dans laquelle les unités de travail (4, 5) s'étendent sensiblement horizontalement et transversalement à la direction d'avance au travail (A) et une position de transport dans laquelle les unités de travail (4, 5) s'étendent sensiblement au-dessus du châssis (1), et inversement. L'attelage (3) peut pivoter autour de l'articulation transversale (13) d'une valeur voisine de 90°. L'engin agricole respecte ainsi la hauteur maximale autorisée pour circuler sur la voie publique. L'articulation transversale (13) présente avantageusement un axe sensiblement horizontal et sensiblement perpendiculaire à la direction d'avance (A). L'actionneur (14) s'étend directement sous le châssis (1) de l'engin agricole pour ne pas limiter la hauteur de la garde au sol de l'engin agricole. L'allongement de l'actionneur (14) provoque le basculement de la structure rigide (12) dans la position de transport.

Pour éviter au moins partiellement la transmission au châssis (1) des efforts subis par les unités de travail (4, 5) lors du travail, l'engin est équipé d'un dispositif amortisseur. Avec un dispositif amortisseur, le châssis (1) et l'attelage (3) seront donc moins sollicités. Le dispositif amortisseur est implanté entre le châssis (1) et la structure rigide (12). On pourrait ainsi envisager au moins un élément élastique dans la partie inférieure de la structure rigide (12). Cet élément élastique constitue également une butée pour la position de travail de l'attelage (3). Une autre solution est d'envisager de monter un accumulateur oléopneumatique sur l'actionneur (14) pour réaliser la fonction d'amortisseur.

Il pourrait être prévu d'utiliser l'actionneur (14) pour passer de la position de travail des unités de travail (4, 5) à la position de manoeuvre dans laquelle les unités de travail (4, 5) sont éloignées du sol. L'actionneur (14) est, par exemple, allongé à mi-course pour dégager les unités de travail (4, 5) du sol par pivotement autour de l'articulation transversale (13).

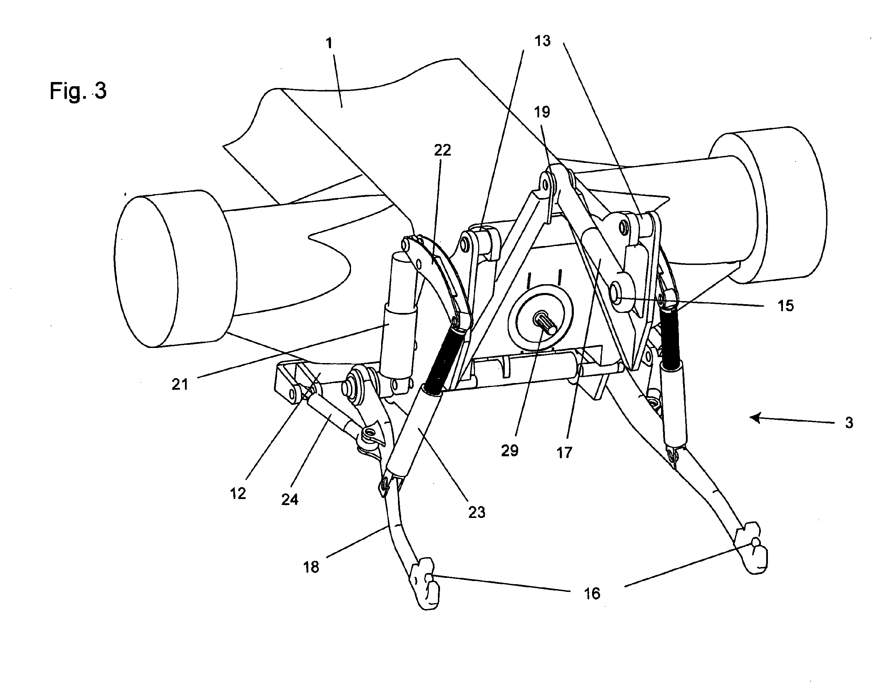

Les figures 3 à 6 illustrent la partie arrière de l'engin agricole et plus particulièrement un attelage à trois points. La figure 3 montre en perspective l'attelage (3) à trois points. Dans cette représentation, l'actionneur (14) n'est pas visible et le cadre d'attelage (6) des unités de travail (4, 5) n'est pas représenté.

Un tel attelage à trois points est connu en soi, il comporte un point d'attelage supérieur (15) et deux points d'attelage inférieurs (16). Ces points d'attelage (15, 16) permettent d'accrocher le cadre d'attelage (6). Le point d'attelage supérieur (15) s'étend dans le plan vertical médian (P) et les deux points d'attelage inférieurs (16) s'étendent en dessous et de part et d'autre du plan vertical médian (P). Le cadre d'attelage (6) des unités de travail (4, 5) est accroché au châssis (1) via l'attelage (3). L'attelage (3) comporte à cet effet, une barre supérieure (17) et deux barres inférieures (18). La barre supérieure (17) est articulée sur la structure rigide (12) au moyen d'une articulation supérieure (19). L'autre extrémité de la barre supérieure (17) est destinée à être liée au cadre d'attelage (6) via le point d'attelage supérieur (15). Chaque barre inférieure (18) est articulée à la structure rigide (12) au moyen d'une articulation inférieure (20) respective. Chaque barre inférieure (18) est destinée à être reliée au cadre d'attelage (6) via le point d'attelage inférieur (16) correspondant.

L'attelage (3) à trois points doit disposer des fonctionnalités habituelles. De manière classique, l'attelage (3) doit pouvoir être déplacé entre une position de travail dans laquelle les unités de travail (4, 5) s'étendent au voisinage du sol et transversalement à la direction d'avance (A) et une position dans laquelle les unités de travail (4, 5) sont éloignées du sol pour faciliter les manoeuvres en bout de parcelle. Pour effectuer ce déplacement, il est ainsi prévu au moins un vérin de relevage (21) qui agit entre la structure rigide (12) et la barre inférieure (18) de l'attelage (3). La liaison entre le(les) vérin(s) de relevage (21) et la barre inférieure (18) respective est réalisée par l'intermédiaire d'un bras de relevage (22) et d'une bielle de relevage (23). Le vérin de relevage (21) est solidaire de la structure rigide (12). Ce dernier s'étend sensiblement verticalement alors que le bras de relevage (22) est sensiblement horizontal. Le bras de relevage (22) est du type basculeur articulé entre le vérin de relevage (21) et la bielle de relevage (23). La bielle de relevage (23) est réglable en longueur. Le vérin de relevage (21) permet d'abaisser ou de relever le point d'attelage inférieur (16) correspondant pour passer d'une position de travail à une position relevée de manoeuvre. Grâce à ces éléments (17, 18, 21, 22, 23), les unités de travail (4, 5) sont éloignées du sol par un mouvement de translation sensiblement vertical. Il est encore prévu au moins un stabilisateur (24) qui agit entre la structure rigide (12) et la barre inférieure (18) respective de attelage (3). Ce stabilisateur (24) limite le déplacement latéral de la barre inférieure (18) et par conséquent le déplacement latéral de l'attelage (3). Chaque stabilisateur (24) est réglable en longueur.

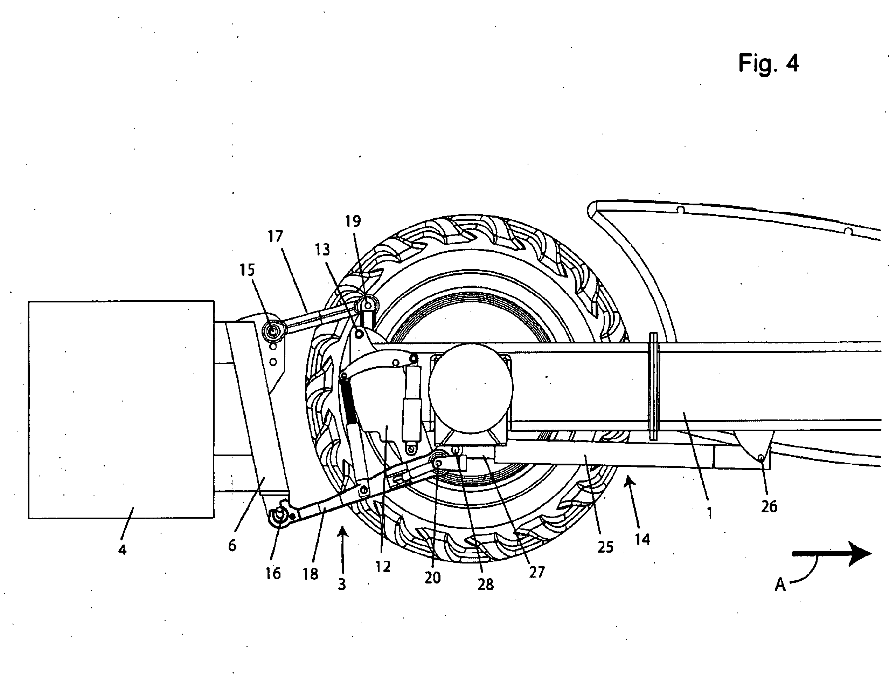

Selon la figure 4, l'articulation transversale (13) s'étend dans la partie supérieure de la structure rigide (12) et plus particulièrement dans le voisinage de l'articulation supérieure (19). De préférence, l'articulation supérieure (19) est située sensiblement au-dessus de l'articulation transversale (13) liant la structure rigide (12) au châssis (1). L'articulation supérieure (19) est encore située sensiblement en avant de l'articulation transversale (13) compte tenu de la direction d'avance (A). L'actionneur (14), s'étendant sous le châssis (1), permet le pivotement de la structure rigide (12) autour de l'articulation transversale (13) pour basculer l'attelage (3) de 90° dans la position de transport. Il est important que l'actionneur (14) ne limite pas la garde au sol de l'engin pour éviter les chocs et le passage d'obstacles lors des déplacements sur la route et dans les prés. Il est ainsi disposé directement sous le châssis (1). Dans l'exemple de réalisation représenté, l'actionneur (14) agit en un point unique de la structure rigide (12), avantageusement ce point est disposé dans le plan vertical médian (P). Toutefois, il est envisageable de disposer de deux actionneurs (14), voire plus, agissant en divers points de la structure rigide (12), par exemple sur les côtés et éventuellement au centre, de manière à répartir les efforts appliqués nécessaires au basculement. A la lumière des figures 4 à 6, l'actionneur (14) comporte un corps (25) lié au châssis (1) au moyen d'une première articulation (26) d'axe sensiblement horizontal et perpendiculaire à la direction d'avance (A). L'actionneur comporte également une tige (27) liée à la structure rigide (12) au moyen d'une deuxième articulation (28) d'axe sensiblement horizontal et perpendiculaire à la direction d'avance (A). La tige (27) de l'actionneur (14) est assez longue pour permettre le basculement de 90° de l'attelage (3). La garde au sol doit être acceptable, quelle que soit la position de la tige (27). La deuxième articulation (28) est positionnée de manière à ce que, lors du basculement de 90° de la structure rigide (12), celle-ci n'entre pas en contact avec le sol et en plus reste à une certaine distance du sol. La deuxième articulation (28) s'étend dans la partie inférieure de la structure rigide (12). La première articulation (26) et la deuxième articulation (28) sont disposées dans le plan vertical médian (P) de l'engin agricole.

Dans la position de travail, figure 4, l'articulation transversale (13) s'étend sensiblement en arrière et sensiblement en dessous de l'articulation supérieure (19). La deuxième articulation (28) s'étend sensiblement en avant et sensiblement au-dessus des articulations inférieures (20). Lors du travail, la tige (27) de l'actionneur (14) est rétractée et l'attelage (3) fonctionne comme un attelage à trois points standard, décrit ci-avant. Dans la position de transport, la structure rigide (12) a basculé d'environ 90° autour de l'articulation transversale (13). L'articulation supérieure (19) a pivoté vers l'avant et se trouve sensiblement en dessous de l'articulation transversale (13). Le châssis présente une découpe permettant le pivotement de la barre supérieure (17) dans la position de transport.

Le passage de la position de travail à la position de transport est illustré sur les figures 4, 5 et 6.

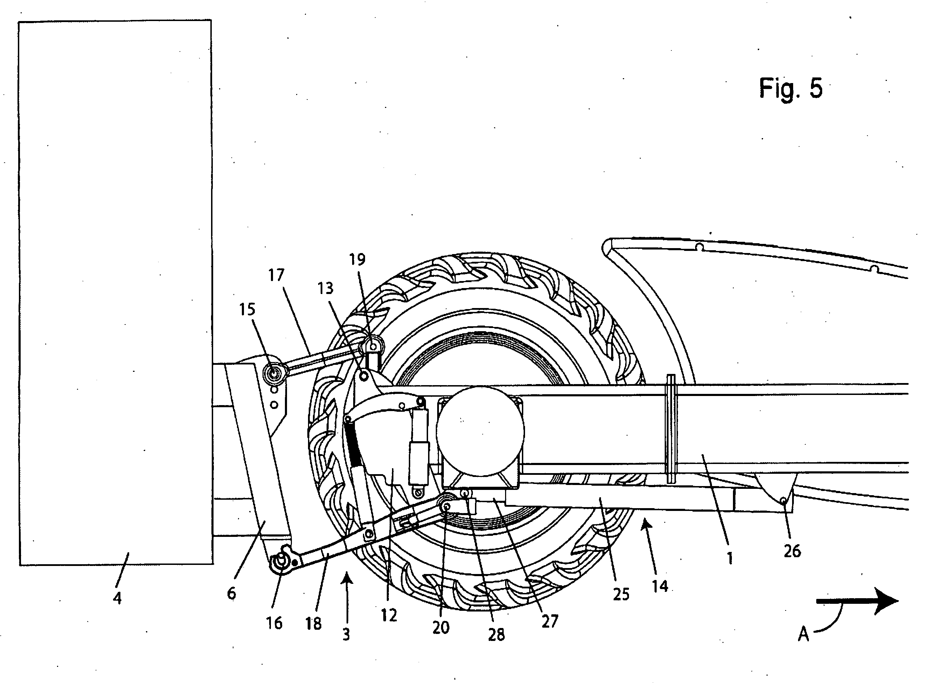

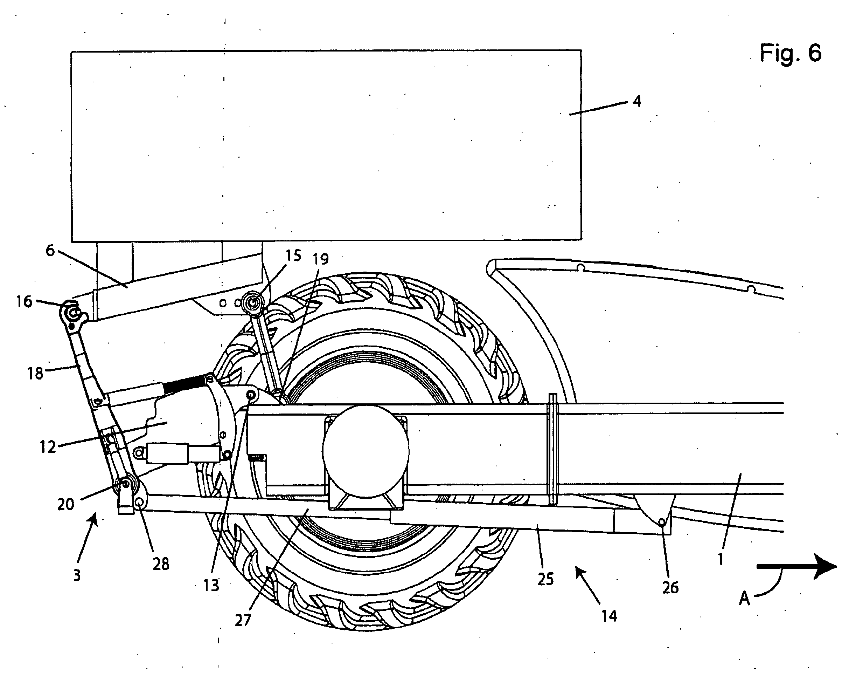

La figure 4 représente la position de travail dans laquelle les unités de travail (4, 5) sont disposées transversalement à la direction d'avance (A) et de préférence dans le prolongement l'une de l'autre. La figure 5 représente la position dans laquelle les unités de travail (4, 5) ont été déplacées à la verticale et sont disposées symétriquement par rapport au plan vertical médian (P). La figure 6 représente la position de transport dans laquelle les unités de travail (4, 5) sont disposées au-dessus du châssis (1). Le passage de la position de travail à la position verticale des unités de travail (4, 5) a été décrit précédemment.

En partant de la position verticale des unités de travail (4, 5), représentée à la figure 5, on commande, depuis la cabine de pilotage (2), l'allongement de l'actionneur (14), ce qui provoque le basculement de la structure rigide (12) autour de l'articulation transversale (13) pour amener les unités de travail (4, 5) de la position verticale à une position horizontale au-dessus et sensiblement sur le châssis (1). La structure rigide (12) doit supporter le poids des unités de travail (4, 5) et du cadre d'attelage (6) lors du basculement.

Il est préférentiellement disposé sur la structure rigide (12) différents éléments pouvant assurer la sécurité de l'attelage (3) dans la position de transport. De tels moyens sont, par exemple, des dispositifs de verrouillage qui empêchent les mouvements de l'attelage (3) autour de l'articulation transversale (13) lorsque l'attelage (3) est en position de transport. Divers moyens peuvent être imaginés pour ces dispositifs de sécurité sans sortir du cadre de l'invention.

A la lumière de la figure 3, on remarque qu'une articulation transversale (13) est disposée de chaque côté du plan vertical médian (P). Ceci permet d'obtenir une meilleure stabilité lors du basculement de l'attelage (3).

L'actionneur (14) peut être un vérin hydraulique à simple ou à double effet. D'une manière particulièrement avantageuse, le vérin est à double effet. Ainsi, lorsque les unités de travail (4, 5) sont repliées sur le châssis (1), on évite tout mouvement intempestif de l'ensemble lors du transport, la sécurité est améliorée.

Le passage de la position de transport à la position de travail permettant le fonctionnement des unités de travail (4, 5) s'effectue selon le processus inverse à celui précédemment décrit, après déverrouillage des moyens de sécurité nécessaires.

L'engin agricole selon l'invention équipé de l'attelage (3) est performant car il peut porter des unités de travail (4, 5) de grande dimension et peut circuler sur les routes puisqu'au transport il respectera le gabarit routier. Avec un tel attelage (3), l'engin agricole est polyvalent, il peut recevoir divers types d'unités de travail (4, 5). Ainsi l'engin automoteur pourra recevoir au moins deux faucheuses de grande largeur de travail. L'unité de travail (4, 5) pourra, selon l'utilisation, être plutôt une faucheuse conditionneuse, un broyeur, une herse rotative, un regroupeur d'andains ou un outil à dents, etc.

Afin de pouvoir animer les unités de travail (4, 5) l'engin agricole dispose d'une prise de force (29) qui permet la transmission de puissance du moteur aux unités de travail (4, 5). La transmission est réalisée au moyen d'éléments de transmission mécaniques tels qu'un arbre télescopique à joints universels double équipé de cardan grand angle, le grand angle de fonctionnement permettant le basculement de 90° de l'attelage (3). La transmission peut également combiner des éléments de transmission mécaniques et hydrauliques. Ainsi, la prise de force (29) de l'engin entraîne une pompe hydraulique qui est embarquée sur l'unité de travail. Une telle transmission réduit l'entretien et la maintenance.

La figure 6 illustre une deuxième variante d'un engin agricole automoteur selon l'invention. Ce type d'engin est décrit dans la demande FR 0551207 de la demanderesse. Il comporte des unités de travail (4, 5) placées de manière frontale pour le travail, lorsque l'engin se déplace dans la direction (A) de travail.

Pour passer dans la position de transport, la cabine de pilotage (2) est pivotée de 180° et est déplacée à l'opposé des unités de travail (4, 5) sur le châssis (1). Lesdites unités de travail (4, 5) sont repliées de la même manière que dans la variante précédemment décrite. En position de transport, ce type particulier d'engin agricole se déplace dans la direction (B) opposée à la direction de travail (A). L'engin se présente dans cette position de transport également selon la représentation de la figure 2.

La description qui précède fait référence au repliement de deux unités de travail (4, 5) portées par l'attelage (3). II est envisagé dans le cadre de l'invention de positionner plus de deux unités de travail, par exemple trois, et prévoir une configuration repliée adaptée. Dans l'hypothèse de trois unités de travail, il peut par exemple être prévu d'employer deux unités latérales de grandes dimensions de part et d'autre d'une unité centrale de dimension réduite, typiquement de la largeur de l'engin agricole.

Le passage à la position de transport s'effectuant par rotation de l'attelage (3) après repliement à la verticale des deux unités latérales de part et d'autre de l'unité centrale. Au transport, les unités latérales se situent sensiblement au-dessus du châssis (1) et dans un plan horizontal et parallèle à la direction d'avance (B) alors que l'unité de travail centrale reste toujours perpendiculaire à la direction d'avance (A, B). L'unité de travail centrale est, dans la position de transport, soulevée et s'étend à l'arrière du châssis (1). Le fonctionnement de l'attelage (3) basculant restant identique.

Il est envisageable d'utiliser divers moyens annexes tels que des butées, des amortisseurs, des stabilisateurs, etc... pour que l'attelage (3) puisse fonctionner en toute sécurité quelles que soient les positions de travail et de transport rencontrées et pour passer d'une position à une autre sans risque pour l'utilisateur et le matériel. Il est notamment prévu d'utiliser des moyens empêchant les mouvements autour de l'articulation transversale (13) lorsque l'attelage (3) se trouve dans une position déterminée de travail ou de transport de manière à verrouiller tout basculement non souhaité de l'attelage (3).

Il peut encore être prévu un attelage qui comporte un seul point d'attelage supérieur (15) et un seul point d'attelage inférieur (16). Un autre attelage comporterait deux points d'attelage supérieurs (15) et deux points d'attelage inférieurs (16).

Selon l'exemple de réalisation représenté, bien entendu, l'invention n'est pas limitée aux modes de réalisation décrits et représentés à titre d'exemples, mais elle comprend aussi tous les équivalents techniques ainsi que leurs combinaisons.

## Revendications

1. Engin agricole comportant un châssis (1), un moteur, une cabine de pilotage (2), un attelage (3) et au moins deux unités de travail (4, 5) liées audit attelage (3) dudit engin agricole par un cadre d'attelage (6), lesdites au moins deux unités de travail (4, 5) pouvant être pivotées entre une position de travail dans laquelle lesdites unités de travail (4, 5) s'étendent sensiblement horizontalement et transversalement à la direction d'avance au travail (A) et une position de transport dans laquelle lesdites unités de travail (4, 5) s'étendent sensiblement au-dessus dudit châssis (1), ***caractérisé en ce que*** l'attelage (3) est lié audit châssis (1) via une structure rigide (12), elle-même liée audit châssis (1) au moyen d'une articulation transversale (13), au moins un actionneur (14) étant prévu entre le châssis (1) et ladite structure rigide (12) pour permettre le basculement de ladite structure rigide (12) autour de l'articulation transversale (13).

2. Engin agricole selon la revendication 1, ***caractérisé en ce que*** l'attelage (3) peut pivoter autour de l'articulation transversale (13) d'une valeur voisine de 90°.

3. Engin agricole selon la revendication 1 ou 2, ***caractérisé en ce que*** l'articulation transversale (13) présente un axe sensiblement horizontal et sensiblement perpendiculaire à la direction d'avance (A).

4. Engin agricole selon l'une quelconque des revendications 1 à 3, ***caractérisé en ce que*** l'actionneur (14) est prévu de telle sorte que son allongement provoque le basculement de la structure rigide (12) dans la position de transport.

5. Engin agricole selon l'une quelconque des revendications 1 à 4, ***caractérisé en ce que*** l'actionneur (14) s'étend directement sous le châssis (1) de l'engin agricole.

6. Engin agricole selon l'une quelconque des revendications 1 à 5, ***caractérisé en ce que*** l'attelage (3) est un attelage à trois points comportant d'une part une barre supérieure (17) liée à la structure rigide (12) au moyen d'une articulation supérieure (19), et d'autre part deux barres inférieures (18) liées chacune à la structure rigide (12) au moyen d'une articulation inférieure (20) respective.

7. Engin agricole selon la revendication 6, ***caractérisé en ce que**,* dans la position de travail, l'articulation supérieure (19) est située sensiblement au-dessus de l'articulation transversale (13) liant la structure rigide (12) au châssis (1).

8. Engin agricole selon la revendication 6, ***caractérisé en ce que**,* dans la position de transport, l'articulation supérieure (19) est située sensiblement en avant de l'articulation transversale (13) en considérant la direction d'avance (A, B) au transport.

9. Engin agricole selon la revendication 6, ***caractérisé en ce que*** le châssis (1) présente une découpe permettant le pivotement de la barre supérieure (17) dans la position de transport.

10. Engin agricole selon l'une quelconque de revendications 6 à 9, ***caractérisé en ce qu**,'il* est prévu au moins un vérin de relevage (21) agissant entre la structure rigide (12) et la barre inférieure (18) respective de l'attelage (3).

11. Engin agricole selon la revendication 10, ***caractérisé en ce que*** la liaison entre le (les) vérin(s) de relevage (21) et la barre inférieure (18) respective est réalisée par l'intermédiaire d'un bras de relevage (22) du type basculeur, et d'une bielle de relevage (23).

12. Engin agricole selon la revendication 11, ***caractérisé en ce que*** la bielle de relevage (23) est réglable en longueur.

13. Engin agricole selon l'une quelconque de revendications 6 à 12, ***caractérisé en ce qu'****il* est prévu au moins un stabilisateur (24) agissant entre la structure rigide (12) et la barre inférieure (18) respective de l'attelage (3).

14. Engin agricole selon la revendication 13, ***caractérisé en ce que*** le stabilisateur (24) est réglable en longueur.

15. Engin agricole selon l'une quelconque de revendications 1 à 14, ***caractérisé en ce qu'****il* est prévu des moyens de sécurité empêchant les mouvements de l'attelage (3), notamment en rotation autour de l'articulation transversale (13), lorsque celui-ci est en position de transport.

## Claims

1. Agricultural machine comprising a chassis (1), an engine, a driver's cabin (2), a hitch (3) and at least two working units (4, 5) connected to the said hitch (3) of the said agricultural machine by a hitching frame (6), the said at least two working units (4, 5) being able to be pivoted between a working position in which the said working units (4, 5) extend substantially horizontally and transversely to the direction of travel in work (A) and a transport position in which the said working units (4, 5) extend substantially above the said chassis (1), ***characterized in* that** the hitch (3) is connected to the said chassis (1) via a rigid structure (12), itself connected to the said chassis (1) by means of a transverse articulation (13), at least one actuator (14) being provided between the chassis (1) and the said rigid structure (12) to allow the said rigid structure (12) to tip about the transverse articulation (13).

2. Agricultural machine according to claim 1, ***characterized in* that** the hitch (3) is able to pivot about the transverse articulation (13) by a value of approximately 90°.

3. Agricultural machine according to claim 1 or 2, ***characterized in* that** the transverse articulation (13) has an axis that is substantially horizontal and substantially perpendicular to the direction of travel (A).

4. Agricultural machine according to any one of claims 1 to 3, ***characterized in* that** the actuator (14) is provided such that its lengthening causes the rigid structure (12) to tip into the transport position.

5. Agricultural machine according to any one of claims 1 to 4, ***characterized in* that** the actuator (14) extends directly underneath the chassis (1) of the agricultural machine.

6. Agricultural machine according to any one of claims 1 to 5, ***characterized in* that** the hitch (3) is a three-point hitch comprising on one hand an upper bar (17) connected to the rigid structure (12) by means of an upper articulation (19) and on the other hand two lower bars (18) each connected to the rigid structure (12) by means of a respective lower articulation (20).

7. Agricultural machine according to claim 6, ***characterized in* that**, in the working position, the upper articulation (19) is situated substantially above the transverse articulation (13) connecting the rigid structure (12) to the chassis (1).

8. Agricultural machine according to claim 6, ***characterized in* that**, in the transport position, the upper articulation (19) is situated substantially in front of the transverse articulation (13) considering the direction of travel (A, B) in transport.

9. Agricultural machine according to claim 6, ***characterized in* that** the chassis (1) has a recess allowing the upper bar (17) to pivot in the transport position.

10. Agricultural machine according to any one of claims 6 to 9, ***characterized in* that** at least one lift cylinder (21) is provided, acting between the rigid structure (12) and the respective lower bar (18) of the hitch (3).

11. Agricultural machine according to claim 10, ***characterized in* that** the connection between the lift cylinder(s) (21) and the respective lower bar (18) is achieved by means of a lift arm (22) of the tipper type, and of a lift link rod (23).

12. Agricultural machine according to claim 11, ***characterized in* that** the lift link rod (23) is adjustable in length.

13. Agricultural machine according to any one of claims 6 to 12, ***characterized in* that** at least one stabilizer (24) is provided, acting between the rigid structure (12) and the respective lower bar (18) of the hitch (3).

14. Agricultural machine according to claim 13, ***characterized in* that** the stabilizer (24) is adjustable in length.

15. Agricultural machine according to any one of claims 1 to 14, ***characterized in* that** safety means are provided preventing the hitch (3) from moving, particularly in rotation about the transverse articulation (13), when the latter is in the transport position.

## Patentansprüche

1. Landwirtschaftliche Maschine, die ein Chassis (1), einen Motor, eine Steuerkabine (2), eine Kupplungsvorrichtung (3) und mindestens zwei Arbeitseinheiten (4, 5) aufweist, die mit der Kupplungsvorrichtung (3) der landwirtschaftlichen Maschine durch einen Kupplungsrahmen (6) verbunden sind, wobei die mindestens zwei Arbeitseinheiten (4, 5) zwischen einer Arbeitsposition, in der sich die Arbeitseinheiten (4, 5) im Wesentlichen horizontal und quer zu der Arbeitsfahrtrichtung (A) erstrecken, und einer Transportposition, in der sich die Arbeitseinheiten (4, 5) im Wesentlichen oberhalb des Chassis (1) erstrecken, geschwenkt werden können, ***dadurch gekennzeichnet,* dass** die Kupplungsvorrichtung (3) mit dem Chassis (1) über eine starre Struktur (12) verbunden ist, die selbst mit dem Chassis (1) mittels eines Quergelenks (13) verbunden ist, wobei mindestens ein Betätigungsglied (14) zwischen dem Chassis (1) und der starren Struktur (12) vorgesehen ist, um das Kippen der starren Struktur (12) um das Quergelenk (13) zu erlauben.

2. Landwirtschaftliche Maschine nach Anspruch 1, ***dadurch gekennzeichnet,* dass** die Kupplungsvorrichtung (3) um das Quergelenk (13) um einen Wert von etwa 90° schwenken kann.

3. Landwirtschaftliche Maschine nach Anspruch 1 oder 2, ***dadurch gekennzeichnet,* dass** das Quergelenk (13) eine im Wesentlichen horizontale und im Wesentlichen zu der Fahrtrichtung (A) senkrechte Achse aufweist.

4. Landwirtschaftliche Maschine nach irgendeinem der Ansprüche 1 bis 3, ***dadurch gekennzeichnet,* dass** das Betätigungsglied (14) derart vorgesehen ist, dass seine Ausdehnung das Kippen der starren Struktur (12) in die Transportposition bewirkt.

5. Landwirtschaftliche Maschine nach irgendeinem der Ansprüche 1 bis 4, ***dadurch gekennzeichnet,* dass** sich das Betätigungsglied (14) direkt unter dem Chassis (1) der landwirtschaftlichen Maschine erstreckt.

6. Landwirtschaftliche Maschine nach irgendeinem der Ansprüche 1 bis 5, ***dadurch gekennzeichnet,* dass** die Kupplungsvorrichtung (3) eine Dreipunktkupplung ist, die einerseits einen oberen Lenker (17), der mit der starren Struktur (12) mittels eines oberen Gelenks (19) verbunden ist, und andererseits zwei untere Lenker (18), die jeweils mit der starren Struktur (12) mittels eines jeweiligen unteren Gelenks (20) verbunden sind, aufweist.

7. Landwirtschaftliche Maschine nach Anspruch 6, ***dadurch gekennzeichnet,* dass** das obere Gelenk (19) in der Arbeitsposition im Wesentlichen oberhalb des Quergelenks (13), das die starre Struktur (12) mit dem Chassis (1) verbindet, liegt.

8. Landwirtschaftliche Maschine nach Anspruch 6, ***dadurch gekennzeichnet,* dass** das obere Gelenk (19) in der Transportposition im Wesentlichen vor dem Quergelenk (13) bezüglich der Fahrtrichtung (A, B) beim Transport liegt.

9. Landwirtschaftliche Maschine nach Anspruch 6, ***dadurch gekennzeichnet,* dass** das Chassis (1) einen Ausschnitt aufweist, der das Schwenken des oberen Lenkers (17) in die Transportposition erlaubt.

10. Landwirtschaftliche Maschine nach irgendeinem der Ansprüche 6 bis 9, ***dadurch gekennzeichnet,* dass** mindestens ein Hubzylinder (21) vorgesehen ist, der zwischen der starren Struktur (12) und des jeweiligen unteren Lenkers (18) der Kupplungsvorrichtung (3) einwirkt.

11. Landwirtschaftliche Maschine nach Anspruch 10, ***dadurch gekennzeichnet,* dass** die Verbindung zwischen dem oder den Hubzylindern (21) und dem jeweiligen unteren Lenker (18) über einen Hubarm (22) des kippenden Typs und eine Hubstange (23) hergestellt ist.

12. Landwirtschaftliche Maschine nach Anspruch 11, ***dadurch gekennzeichnet,* dass** die Hubstange (23) längenverstellbar ist.

13. Landwirtschaftliche Maschine nach irgendeinem der Ansprüche 6 bis 12, ***dadurch gekennzeichnet,* dass** mindestens ein Stabilisator (24) vorgesehen ist, der zwischen der starren Struktur (12) und dem jeweiligen unteren Lenker (18) der Kupplungsvorrichtung (3) wirkt.

14. Landwirtschaftliche Maschine nach Anspruch 13, ***dadurch gekennzeichnet,* dass** der Stabilisator (24) längenverstellbar ist.

15. Landwirtschaftliche Maschine nach irgendeinem der Ansprüche 1 bis 14, ***dadurch gekennzeichnet,* dass** Sicherheitsmittel vorgesehen sind, die die Bewegungen der Kupplungsvorrichtung (3) insbesondere in Drehung um das Quergelenk (13), wenn sich diese in Transportposition befindet, verhindern.
